# EUROPÄISCHE PATENTSCHRIFT

(11) **EP 1 046 461 B1**
(45) Veröffentlichungstag und Bekanntmachung des Hinweises auf die Patenterteilung: **20.11.2002**
(21) Anmeldenummer: 00107029.1
(22) Anmeldetag: 31.03.2000
(51) Int. Cl.: B23Q 39/02, B23Q 5/10, B23Q 1/48, B23Q 7/04

(54) **Universal-Werkzeugmaschine**
Universal machine tool
Machine-outil universelle

(30) Priorität: 21.04.1999 DE 19918082
(43) Veröffentlichungstag der Anmeldung: 25.10.2000
(73) Patentinhaber: DECKEL MAHO GmbH, D-87459 Pfronten (DE)
(72) Erfinder: Geissler, Alfred, 87459 Pfronten (DE); Seitz, Reinhold, 87659 Hopferau (DE)
(74) Vertreter: Beetz & Partner Patentanwälte

(56) Entgegenhaltungen:
- EP-A- 0 340 681
- WO-A-96/09913
- DE-A- 3 721 610
- US-A- 2 393 696
- US-A- 5 058 261

## Beschreibung

Die Erfindung betrifft eine Universal-Werkzeugmaschine zur Fräs- und Drehbearbeitung gemäß dem Oberbegriff des Anspruchs 1 und wie aus der WO 96/09913 bekannt.

Bei einer weiteren - z.B. aus der EP 0 664 176 B1 bekannten - Universal-Fräs- und Bohrmaschine ist die Bearbeitungsspindel in einem Schwenkfräskopf angeordnet, der an einer unter 45° zur Vertikalen geneigten Stirnwand eines Traggehäuses um eine zur Stirnwand senkrechte Anlagefläche verdrehbar ist. Das Traggehäuse ist vertikal verfahrbar an der Vorderseite eines Fahrständers angeordnet, der auf Führungsschienen am hinteren Ende eines Maschinenbetts motorisch verfahrbar montiert ist. Auf dem vorderen Teil des Maschinenbetts ist ein Tischschlitten mit einem Werkstücktisch horizontal verfahrbar angeordnet. Mit einer derart aufgebauten Werkzeugmaschine können komplexe Fräs-, Bohrund Gewindeschneidoperationen an mehreren Seiten eines Werkstücks in einer einzigen Aufspannung durchgeführt werden. Allerdings sind an einer derartigen Maschine keine Drehbearbeitungen mit rotatorischer Hauptschnittbewegung durch das Werkstück durchführbar.

Es sind auch bereits Drehmaschinen mit Werkzeugrevolvern bekannt, in die kleinere Bohr- oder Fräsköpfe einsetzbar sind. Dort sind die Verfahrmöglichkeiten und Zerpanleistungen der Fräsköpfe jedoch begrenzt und deren Antrieb ist vergleichsweise kompliziert. Das Einsatzgebiet derartiger Fräs- und Bohrköpfe in Drehmaschinen ist daher beschränkt.

Aufgabe der Erfindung ist es, eine Universal-Werkzeugmaschine der eingangs genannten Art zu schaffen, die neben einer Fräs- und Bohrbearbeitung mit hoher Zerspanleistung auch die Durchführung einer Drehbearbeitung zur automatischen Komplettbearbeitung von Werkstücken in einer Aufspannung ermöglicht, und leistungsfähiger ist.

Diese Aufgabe wird durch die Merkmale des Anspruchs 1 gelöst.

Die erfindungsgemäße Universal-Werkzeugmaschine bietet die Möglichkeit, zusätzlich zu einer Fräs-, Bohr- und Gewindeschneidbearbeitung mit rotatorischer Hauptschnittbewegung durch das Werkzeug auch eine Drehbearbeitung mit einer rotatorischen Hauptschnittbewegung durch das Werkstück durchzuführen. Dadurch kann eine leistungsfähige, automatische Komplettbearbeitung auch komplizierter geformter Werkstücke ohne aufwendiges Umspannen der Werkstücke zwischen einer Dreh- und einer Fräs- bzw. Bohrmaschine durchgeführt werden. Durch die Vermeidung einer Umspannung der Werkstücke ist eine höhere Bearbeitungsgenauigkeit erreichbar. Ein weiterer wesentlicher Vorteil der erfindungsgemäßen Werkzeugmaschine besteht darin, daß die für die Fräs- und Bohrbearbeitung vorgesehenen Verfahrwege einer Bearbeitungsspindel auch für die Vorschub- und Zustellbewegungen einer Drehbearbeitung ausnutzbar sind, wodurch der konstruktive und steuerungstechnische Aufwand verringert werden kann. Neben der Frästechnologie kann auch die Drehtechnologie in einer Steuerung bei gleicher Benutzeroberfläche abgedeckt werden, wobei die Stärke des Maschinenkonzeptes auch für die Drehbearbeitung nutzbar ist.

Zweckmäßige Ausführungsformen der Erfindung sind in den Unteransprüchen angegeben.

Die Werkstückaufnahmeeinrichtung ist über einen ringförmigen Antriebsmotor angetrieben, der einen an einer Konsole des Werkstückschlittens befestigten Statorring und einem am Drehtisch befestigten Rotorring enthält. Der Antriebsmotor kann z.B. ein kollektorloser ringförmiger Torquemotor sein, der ohne ein zusätzliches Getriebe oder eine Kupplung einen Direktantrieb mit hoher Dynamik und exakter Positionierung ermöglicht. Die Werkstückaufnahmeeinrichtung kann so bei geringem Platzbedarf und Gewicht nicht nur mit einer hohen Dynamik zur Ausführung einer Drehbearbeitung angetrieben werden, sondern kann auch in beliebigen Winkelstellungen positioniert werden, um z.B. bestimmte Fräs- oder Bohrbearbeitungen auszuführen.

An der Drehspindel ist zweckmäßigerweise ein automatisch betätigbares Drei- oder Mehrbackenfutter angeordnet. Die Drehspindel kann aber auch mit einem inneren Spannkegel zur Aufnahme unterschiedlicher Kraftspannfutter ausgestattet sein.

Weitere Besonderheiten und Vorzüge der Erfindung ergeben sich aus der folgenden Beschreibung vorteilhafter Ausführungsbeispiele anhand der Zeichnung. Es zeigen:
- Fig. 1:: eine Universal-Werkzeugmaschine Zur Fräs-, Bohr- und Drehbearbeitung in schematischer Seitenansicht;
- Fig. 2:: die in Fig. 1 dargestellte Universal-Werkzeugmaschine mit einem Stangenlademagazin und einer Schutzkabine in einer zum Teil geschnittenen schematischen Seitenansicht;
- Fig. 3:: einen Werkstückschlitten mit Drehtisch in einer zum Teil geschnittenen Perspektivansicht; und
- Fig. 4:: den in Fig. 3 gezeigten Werkstückschlitten mit einem aufgespannten Werkstück und Drehwerkzeugen zur Erläuterung einer Drehbearbeitung auf der erfindungsgemäßen Universal-Werkzeugmaschine.

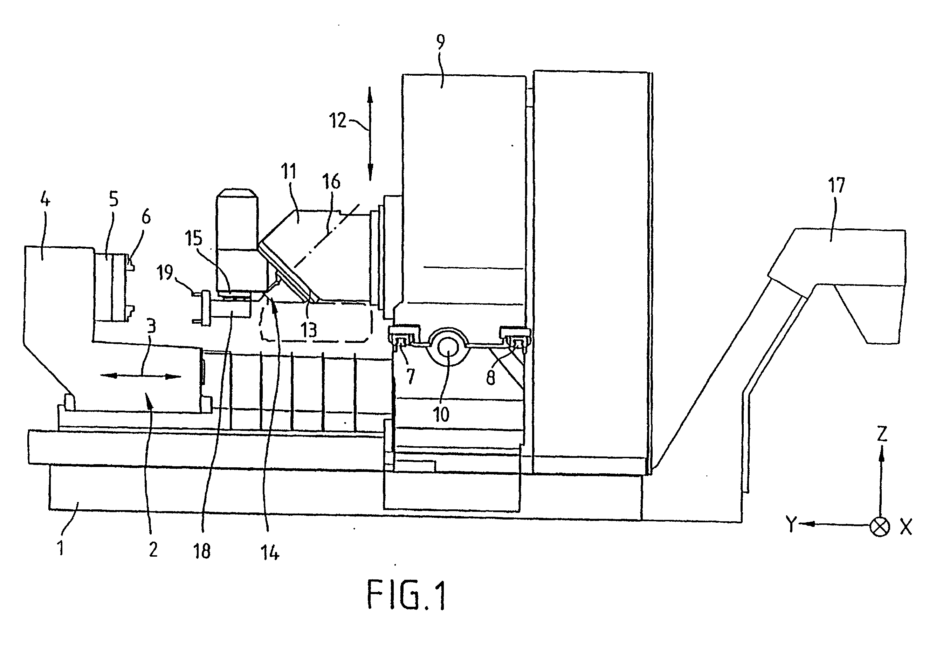

Die in Fig. 1 schematisch dargestellte Universal-Werkzeugmaschine enthält ein Maschinenbett 1, auf dem ein Werkstückschlitten 2 in einer Y-Achse in Richtung des Doppelpfeils 3 motorisch verfahrbar angeordnet ist. Der Werkstückschlitten 2 enthält einen Spindelstock 4, in dem eine durch einen nicht dargestellten Antriebsmotor drehangetriebene horizontale Drehspindel 5 mit einem automatisch betätigbaren Dreibackenfutter 6 als Spanneinrichtung zum Spannen von Werkstücken drehbar gelagert ist. Die Drehspindel 5 kann aber auch mit einer anderen Werkstückspanneinrichtung und/oder einem inneren Spannkegel zur Aufnahme unterschiedlicher Kraftspannfutter oder dgl. ausgestattet sein.

Auf dem hinteren Teil des Maschinenbetts 1 sind senkrecht zur Zeichenebene verlaufende Führungsschienen 7 und 8 montiert, auf denen ein Fahrständer 9 über eine motorisch angetriebene Gewindespindel 10 in einer X-Achse horizontal verfahrbar geführt ist. An der Vorderseite des Fahrständers 9 ist ein Traggehäuse 11 in einer Z-Achse in Richtung des Doppelpfeils 12 vertikal nach oben und unten verfahrbar angeordnet. An einer gegenüber der Vertikalen um 45° geneigten, schräg nach unten weisenden Stirnwand 13 des Traggehäuses 11 ist als Bearbeitungseinheit ein Schwenkfräskopf 14 mit einer motorisch drehbaren Bearbeitungsspindel 15 um eine zur Stirnwand 13 senkrechte Schwenkachse 16 verdrehbar montiert. Die Bearbeitungsspindel 15 ist unter einem Winkel von 45° zur Schwenkachse 16 innerhalb des Schwenkfräskopfes 14 gelagert. Durch eine entsprechende Drehung des Schwenkfräskopfes 14 um die Schwenkachse 16 ist die Bearbeitungsspindel 15 somit zwischen einer mit durchgezogenen Linien dargestellten vertikalen Bearbeitungsstellung und einer mit gestrichelten Linien gezeigten horizontalen Bearbeitungsstellung verschwenkbar. Am Ende des Maschinenbetts 1 ist ein Späneförderer 17 für den Abtransport der bei der Bearbeitung anfallenden Späne angeordnet.

In die Bearbeitungsspindel 15 sind neben den Werkzeugen für z.B. eine Fräs-, Bohr- oder Gewindeschneidbearbeitung auch die Werkzeuge für eine Drehbearbeitung einwechselbar. Diese Werkzeuge können in entsprechenden Halterungen oder Werkzeugaufnahmen angeordnet sein, die in einem nicht dargestellten Werkzeugmagazin abgelegt und durch eine geeignete Werkzeugwechseleinrichtung in die Bearbeitungsspindel einwechselbar sind. Für die Durchführung einer Drehbearbeitung an einem an der Drehspindel 5 gespannten Werkstück ist z.B. ein Werkzeugträger für Wendeschneidplatten in die Bearbeitungsspindel 15 einwechselbar. Die rotatorische Hauptschnittbewegung wird dann über die motorisch angetriebene Drehspindel 5 erzeugt. Die Vorschubbewegung in der Y-Achse erfolgt durch Verfahren des Werkstückschlittens 2 mit der darauf angeordneten Drehspindel 5, während die Zustellbewegungen in der X- und Z-Achse durch Verfahren des Fahrständers 9 und des Traggehäuses 11 erfolgen. Durch eine gesteuerte Bewegung in den einzelnen Verfahr- und Schwenkachsen können so auch komplexe Dreharbeiten mit hoher Präzision durchgeführt werden. Darüber hinaus sind in die Bearbeitungsspindel 15 auch die üblichen Werkzeuge für eine Fräs-, Bohr-, Gewindeschneidbearbeitung oder dgl. einsetzbar. Dadurch können an den an der Drehspindel 5 gespannten Werkstücken im Anschluß oder vor einer Drehbearbeitung auch sämtliche weiteren Bearbeitungsarten wie z.B. Fräsen, Bohren, Reiben und Gewindeschneiden in einer einzigen Aufspannung durchgeführt werden. Es wird somit eine Komplettbearbeitung ohne aufwendiges Umspannen zwischen unterschiedlichen Maschinentypen ermöglicht.

In die Bearbeitungsspindel 15 kann aber auch eine in Fig. 1 schematisch dargestellte Werkstückwechseleinrichtung 18 zur Auswechslung der an der Drehspindel 5 gespannten Werkstücke einsetzbar sein. Die Einwechslung der Werkstückwechseleinrichtung 18 in die Bearbeitungsspindel 15 kann durch einen - nicht gezeigten - automatischen Werkzeugwechsler erfolgen, wobei die Werkstückwechseleinrichtung 18 während der Bearbeitung in einem ebenfalls nicht dargestellten Werkzeugmagazin abgelegt ist. Die Werkstückwechseleinrichtung kann z.B. ein mit mehreren Greiferarmen 19 versehener Werkstückgreifer sein, der über einen Spannkonus in die Bearbeitungsspindel 15 einwechselbar ist. Die Betätigung der Greiferarme 19 kann bei einer zweckmäßigen Ausführung z.B. über die innere Kühlmittelzufuhr zur Bearbeitungsspindel 15 erfolgen. Da über die Kühlmittelzufuhr an der Werkzeugmaschine in der Regel ein relativ hoher Druck von z.B. 40 bar zur Verfügung steht, ist keine zusätzliche Energieversorgung für die Betätigung der Greiferarme 19 erforderlich.

Durch den mit Hilfe der Bearbeitungspindel 15 verfahrbaren Werkstückgreifer können die fertigbearbeiteten Werkstücke an der Drehspindel entnommen und zu einer Werkstückablage transportiert werden. Über den Werkstückgreifer kann die Drehspindel auch mit neuen Werkstücken versorgt werden. Es kann aber auch ein Stangenlademagazin vorgesehen sein, über das ein geeignetes Stangenmaterial zur Drehspindel transportiert wird.

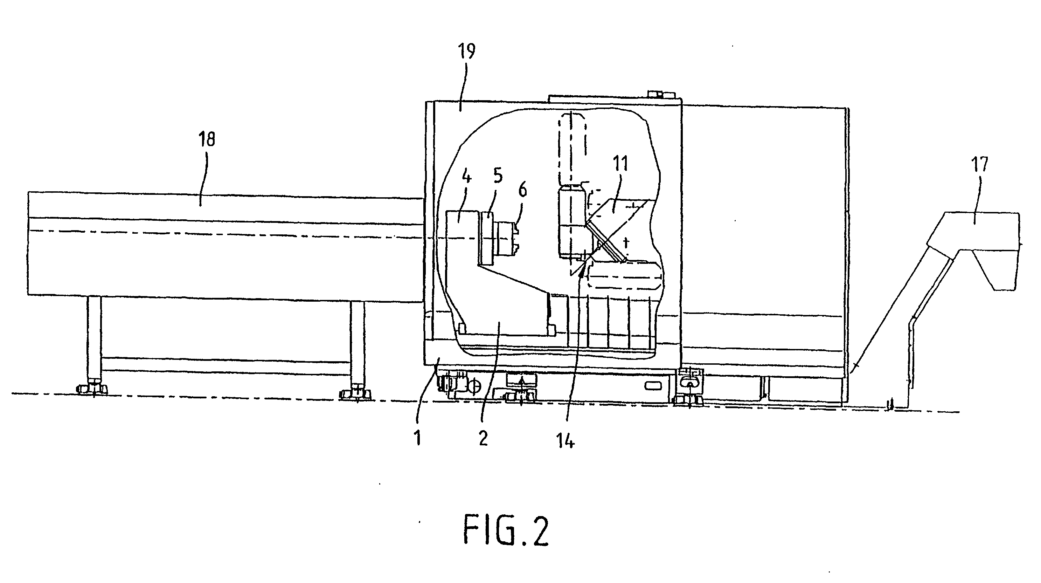

Bei der in Fig. 2 dargestellten weiteren Ausführungsform der erfindungsgemäßen Universal-Werkzeugmaschine ist vor dem Maschinenbett 1 ein an sich bekanntes Stangenlademagazin 18 angeordnet. Über dieses Stangenmagazin 18 können stangenförmige Werkstücke zu einer als Hohlwelle ausgebildeten Drehwelle 5 transportiert und über das Dreibackenfutter 6 gespannt werden. In Fig. 2 ist auch eine Schutzkabine 19 dargestellt, von der die Werkzeugmaschine üblicherweise umgeben ist.

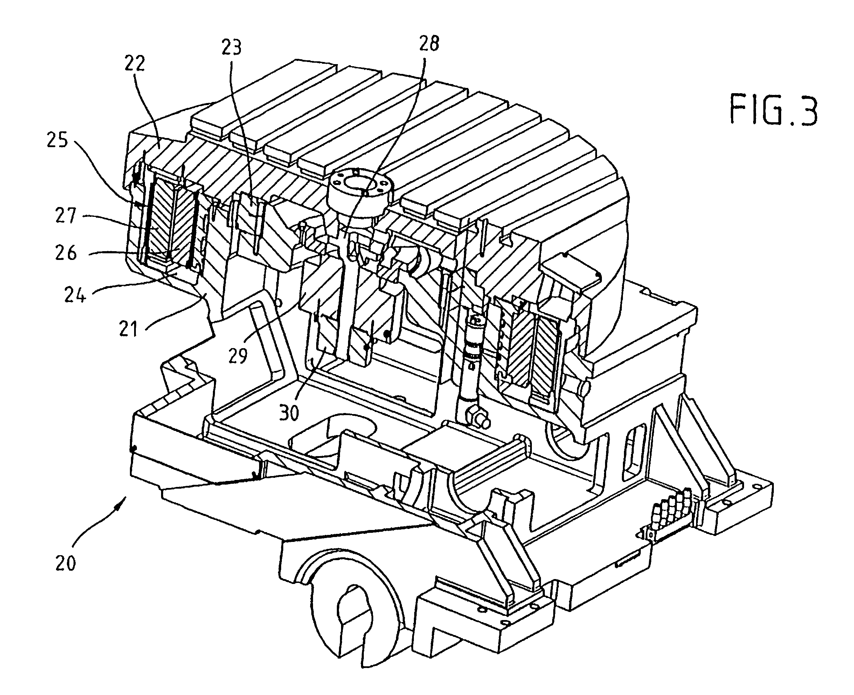

In Fig. 3 ist ein weiterer Werkstückschlitten 20 gezeigt, der anstelle des in den Fig. 1 und 2 dargestellten Werkstückschlittens 2 verwendbar ist. Dieser Werkstückschlitten 20 enthält eine Konsole 21, auf der ein horizontaler Drehtisch 22 über ein Ringlager 23 um eine Vertikalachse verdrehbar gelagert ist. In einem zur vertikalen Drehachse des Werkstücktisches 22 konzentrischen Ringraum 24 innerhalb der Konsole 21 ist ein Antriebsmotor 25 angeordnet, der einen mit der Konsole 21 fest verbundenen inneren Statorring 26 an der Innenwandung des Ringraums 24 und einen an der Unterseite des Werkstücktisches befestigten äußeren Rotorring 27 enthält. An der Unterseite des Drehtisches 22 ist zu seiner Drehachse konzentrisch ein nach unten ragender Zapfen 28 befestigt, um den ein Schleifring 29 und ein Drehgeber 30 angeordnet ist. Der Antriebsmotor 25 kann z.B. ein kollektorloser ringförmiger Torquemotor sein, der auch ohne Kupplung oder Getriebe neben einer hohen Dynamik zur Ausführung einer Drehbearbeitung auch eine exakte Positionierung zur Durchführung von Fräs- und Bohrbearbeitungen in unterschiedlichen Winkelstellungen ermöglicht.

Die Klemmung des Drehtisches oder der Drehspindel zur Durchführung einer Fräsbearbeitung an einen nicht drehangetriebenen Werkstück kann über den Motor oder eine gesonderte Klemmeinrichtung erfolgen, die bei Bedarf aktivierbar ist. Daüber hinaus können an dem Drehtisch oder der Drehspindel auch einer oder mehrere Unwuchtsensoren angeordnet sein, über die eine unzulässige Unwucht erfaßt und die Werkzeugmaschine abgeschaltet werden kann.

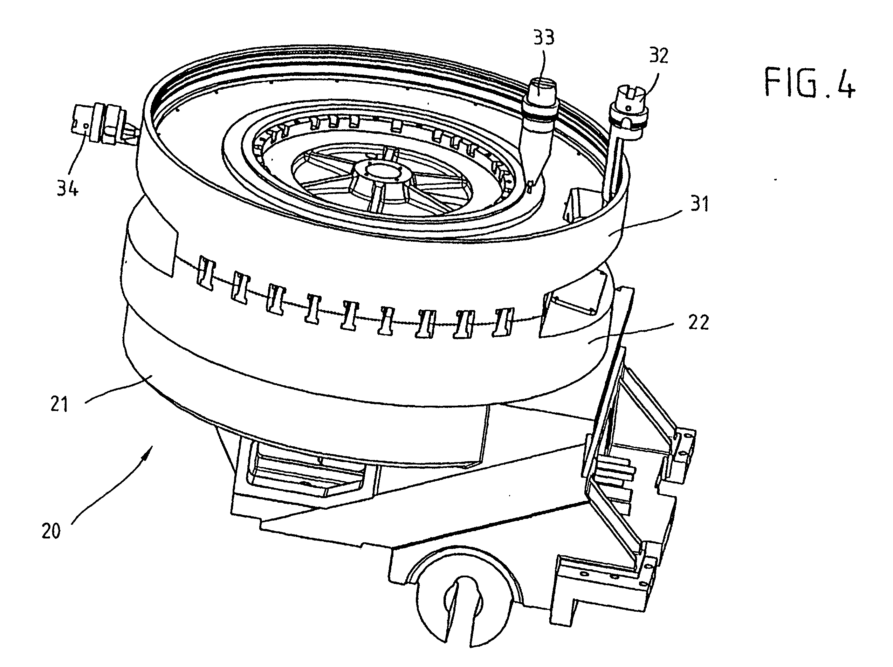

In Fig. 4 ist ein Anwendungsbeispiel für eine Drehbearbeitung an einer erfindungsgemäßen Werkzeugmaschine mit einem Werkstückschlitten 20 gemäß Fig. 2 gezeigt. Auf dem Drehtisch 22 ist ein noch zu bearbeitender Tisch 31 umgekehrt aufgespannt. Mit Hilfe von Drehwerkzeugen 32, 33 und 34, die in die in Fig. 1 gezeigte Bearbeitungsspindel 15 einspannbar sind, können bei entsprechendem Antrieb des Drehtisches 22 unterschiedliche Drehbearbeitungen durchgeführt werden. So können z.B. durch die Drehwerkzeuge 32 und 34 Drehbearbeitungen an der Innen- bzw. Außenseite des Drehtisches und mit dem Drehwerkzeug 33 Einstecharbeiten ausgeführt werden.

Die Erfindung ist nicht auf die im einzelnen beschriebenen und in der Zeichnung dargestellten Ausführungsbeispiele beschränkt. Der Werkstückschlitten kann sowohl eine um eine Horizontalachse drehbare Drehspindel als auch einen um eine Vertikalachse drehbaren Werkstücktisch enthalten.

## Patentansprüche

1. Universal-Werkzeugmaschine zur Fräs- und Drehbearbeitung, bestehend aus
- einem auf einem Maschinenbett (1) motorisch in einer Koordinatenachse horizontal verfahrbaren Werkstückschlitten (20),
- einem auf einer Konsole (21) über ein Ringlager (23) montiertem Drehtisch (22) mit einem getriebelosen Antriebsmotor (25), dessen Stator (26) mit der Konsole (21) und dessen Rotor (27) mit dem Drehtisch (22) fest verbunden sind, und
- einer in mehreren Koordinatenachsen motorisch bewegbaren Bearbeitungseinheit (14) mit einer Arbeitsspindel (15) zur wahlweisen Aufnahme eines Fräs- oder Drehwerkzeugs,
**dadurch gekennzeichnet, daß**
- die den Drehtisch (22) tragende Konsole (21) Bestandteil des Werkstückschlittens (20) ist,
- der Antriebsmotor (25) in einem Ringraum (25) innerhalb der Konsole (21) angeordnet ist,
- der radial innere Statorring (26) mit seiner inneren Mantelfläche an der Konsole (21) befestigt ist und
- der radial außen angeordnete Rotorring (27) an der Unterseite des Drehtisches (22) befestigt ist.

2. Universal-Werkzeugmaschine nach Anspruch 1, **dadurch gekennzeichnet, daß** der Antriebsmotor (25) ein kollektorloser Torquemotor ist.

3. Universal-Werkzeugmaschine nach Anspruch 1 oder 2, **dadurch gekennzeichnet, daß** an der Unterseite des Drehtisches (22) ein zentraler Zapfen (28) befestigt ist, um den ein Schleifring (29) und ein Drehgeber (30) angeordnet ist.

## Claims

1. Universal machine tool for milling and turning comprising
- a work piece slide (20) horizontally movable on a machine bed (1) along one coordinate axis by means of a motor,
- a turntable (22) mounted on a console (21) via a ring bearing (23) and comprising a gearless driving motor (25) the stator (26) of which is fixedly connected to the console (21) and the rotor of which is fixedly connected to the turntable (22) and
- a working unit (14) movable in several coordinate axes by means of a motor and comprising a work spindle (15) for selectively accommodating a milling or turning tool,
**characterised in that**
- the console (21) carrying the turntable (22) is part of the work piece slide (20),
- the driving motor (25) is disposed in a ring-shaped space (24) within the console (21),
- the inner hull surface of the radially inner stator ring (26) is fixed to the console (21), and
- the rotor ring (27) positioned on the radially outer side is fixed to the bottom side of the turntable (22).

2. Universal machine tool according to claim 1, **characterised in that** the driving motor (25) is a collector-less torque motor.

3. Universal machine tool according to claim 1 or 2, **characterised in that** a central tappet (28) is fixed to the bottom side of the turntable (22), a slip ring (29) and a rotating transducer (30) being arranged around the central tappet (28).

## Revendications

1. Machine-outil universelle pour travaux de fraisage et de tournage constituée
- d'un chariot porte-pièces (20) déplaçable horizontalement sur l'axe des coordonnées sur un banc de machine (1) au moyen d'un moteur,
- d'un plateau tournant (22) monté sur une console (21) au moyen d'un palier circulaire (23) ayant un moteur de commande sans boîte de vitesse (25) dont le stator (26) est relié solidement à la console (21) et dont le rotor (27) est relié solidement au plateau tournant (22), et
- d'une unité d'usinage (14) mue par un moteur sur plusieurs axes de coordonnés, ayant une broche de travail (15) destinée à accepter au choix un outil de fraisage ou de tournage,
**caractérisé en ce que**
- la console (21) portant le plateau tournant (22) fait partie du chariot porte-pièces (20),
- le moteur de commande (25) est disposé dans une chambre circulaire (24) à l'intérieur de la console (21),
- le stator circulaire interne disposé radialement (26) est fixé sur la console (21) sur la surface interne de son enveloppe et
- le rotor circulaire externe (27) disposé radialement est fixé sur la face inférieure du plateau tournant (22).

2. Machine-outil universelle conformément à la revendication 1, **caractérisée en ce que** le moteur de commande (25) est un moteur Torque sans collecteur.

3. Machine-outil universelle selon la revendication 1 ou 2, **caractérisée en ce qu'**un tourillon central (28), autour duquel sont disposés une meule annulaire (29) et un encodeur (30), est fixé sur la face inférieure du plateau tournant (22).
